# EUROPÄISCHE PATENTSCHRIFT

(11) **EP 0 471 158 B1**
(45) Veröffentlichungstag und Bekanntmachung des Hinweises auf die Patenterteilung: **11.05.1994**
(21) Anmeldenummer: 91109089.2
(22) Anmeldetag: 04.06.1991
(51) Int. Cl.: B09B 1/00, E02D 31/00

(54) **Anlage zur Sicherung einer Deponie gegen vagabundierendes Austreten von Sickerwasser und verfahrensmässige Massnahmen**
Method and arrangement for preventing leakage of infiltration water from a waste dump
Procédé et installation pour empêcher les fuites d'eau d'infiltration dans une décharge de déchets

(30) Priorität: 17.08.1990 DE 4026048; 13.11.1990 DE 4036103
(43) Veröffentlichungstag der Anmeldung: 19.02.1992
(73) Patentinhaber: Paurat, Friedrich Wilhelm, D-46485 Wesel (DE); Paurat, Roland, Dipl.-Ing., D-46485 Wesel (DE)
(72) Erfinder: Paurat, Friedrich Wilhelm, D-46485 Wesel (DE); Paurat, Roland, Dipl.-Ing., D-46485 Wesel (DE)
(74) Vertreter: Andrejewski, Walter

(56) Entgegenhaltungen:
- EP-A- 0 224 638
- DE-A- 3 415 883
- DE-A- 3 729 653
- FR-A- 2 354 418
- GB-A- 2 169 018
- US-A- 4 349 073

## Beschreibung

Die Erfindung betrifft eine Anlage zur Sicherung einer Deponie gegen vagabundierendes Austreten von Sickerwasser mit zumindest einer unterhalb der Deponie oder in entsprechender Tiefe neben der Deponie aufgefahrenen und aufgehaltenen Service-Strecke und mit einer von der Service-Strecke einseitig oder beidseitig schräg nach Übertage geführten Einrichtung zum Auffangen des Sickerwassers, wobei das Sickerwasser über die Strecke abführbar ist. Die Erfindung betrifft fernerhin ein Verfahren zum Einbringen einer Einrichtung zum Auffangen des Sickerwassers einer Deponie, die im Rahmen einer erfindungsgemäßen Anlage eingesetzt ist. Die Erfindung betrifft aber auch ein Verfahren zum Betrieb einer solchen Anlage.

Bei der bekannten Anlage, von der die Erfindung ausgeht (DE-A- 40 18 821.3, DE-A- 40 18 822.1, wird unterhalb der Deponie eine gleichsam statische Abdichtung eingerichtet, die wannenartig oder schiffsrumpfartig die Deponie umgibt. Dazu wird die Deponie mit bergbaulichen Mitteln unter Auffahren einer Strecke und Einrichtung eines Strebbetriebes unterfahren. Es wird bergbaulicher Versatz oder ein Abdichtungsbaustoff anstelle eines bergbaulichen Versatzes in den sogenannten alten Mann eingebracht, zusätzlich wird ein Drainagebauwerk im Zusammenhang mit einer Folienabdeckung des eingebrachten Versatzes bzw. des Abdichtungsbaustoffes eingerichtet. Die bekannten Maßnahmen sind erforderlich, wo das Gestein oder tonartige Formationen, die die Deponie umgeben, nicht ausreichend locker sind, um als wasserführende Schicht funktionieren zu können. - Andererseits ist es aus anderen Gründen und aus anderem Zusammenhang bekannt, bis zu wasserführenden Schichten Brunnen abzuteufen, wobei das Wasser in den Brunnenschacht deshalb eindringt, weil es im Gestein unter mehr oder weniger hydrostatischem Druck oder sogar höherem Druck ansteht, im Brunnenschacht aber nur atmosphärischer Druck herrscht und folglich das Wasser nach den hydrodynamischen Grundgesetzen dem Potentialgefälle folgt.

Der Erfindung liegt die Aufgabe zugrunde, eine Anlage des eingangs beschriebenen Aufbaus und der eingangs angegebenen Zweckbestimmung zu schaffen, welches wesentlich einfacher ist als die bekannten Maßnahmen und ein bergbauliches Unterfahren der Deponie mit Strecke und Streb nicht mehr erforderlich macht, - und welche Anlage dort eingerichtet werden kann, wo das Gebirge oder das Erdreich in der Umgebung einer Deponie ausreichend wasserführend funktionieren kann, aber nicht Wasser führen muß. In der Umgebung der Deponie muß also zur Aufnahme der erfindungsgemäßen Anlage ein insoweit ausreichend lockeres Gestein befindlich sein.

Zur Lösung dieser Aufgabe lehrt die Erfindung, daß die Einrichtung zum Auffangen des Sickerwassers aus den Casings und Tubings von Rohrsystemen derart besteht, wie sie im Ölfeld bei Erdölbohrungen eingesetzt und wie sie bei der Gewinnung von Erdöl eingebracht sind, daß die Casings mit Sickerwassereintrittsbohrungen versehen sowie die Tubings zur Wartung des Innenraumes der Casings und der Sickerwassereintrittsbohrungen einsetzbar sind, und daß die Casings mit Abstand voneinander angeordnet sind sowie einen Brunnenrost bilden, in den das Sickerwasser, ggf. zusammen mit Grundwasser, eintritt und aus dem es zur Strecke abläuft oder abgesaugt wird. - Ein Brunnenrost ist ein Rost aus Brunnenrohren. Brunnenrohre sind Rohre, deren Wandungen Bohrungen aufweisen, so daß über die Sickerwassereintrittsbohrungen Wasser in die Brunnenrohre eintreten kann. In einem Brunnenrost ist der Abstand zwischen den Brunnenrohren so gewählt, daß unter Berücksichtigung der Druckverhältnisse im umgebenden Gestein oder Erdreich nach Maßgabe der hydrodynamischen Gesetze und des Druckpotentialgefälles das Sickerwasser die Abstände zwischen den Brunnenrohren nicht passieren kann, sondern in die Brunnenrohre eintritt. - Es versteht sich, daß man die beschriebene Einrichtung nicht längs und unterhalb der gesamten Deponie anbringen wird, wenn die geologischen Verhältnisse, die Grundwasserverhältnisse und, damit verbunden, die Sickerwasserverhältnisse, eine solche Sicherung der Deponie lediglich bereichsweise erforderlich machen.

Nach bevorzugter Ausführungsform der Erfindung sind die Rohre aus einzelnen und gekuppelten Casing-Rohrschüssen und Tubing-Rohrschüssen zusammengesetzt. Für die erfindungsgemäße Anlage ist wesentlich, daß sie über lange Zeiträume funktionsfähig bleibt. Dazu lehrt die Erfindung, daß die Casing-Rohrschüsse sowie die Tubing-Rohrschüsse von Übertage aus nachführbar und nach Maßgabe der Nachführung Casing-Rohrschüsse und Tubing-Rohrschüsse von der Service-Strecke aus abziehbar sind. Dieses Nachführen erfolgt in mehr oder weniger langen Zeitabständen, jedenfalls so, daß die Rohrschüsse in der Anlage, die die Casings und die Tubings bilden, langfristig funktionsfähig bleiben.

Die Tubings erfüllen im Rahmen der Erfindung eine besondere, im Ölfeld nicht auftretende Funktion. Während im Ölfeld die Casings gleichsam die Verrohrung bilden und die Tubings die Erdölförderleitung im Bohrloch sind, ist die erfindungsgemäße Anlage dadurch gekennzeichnet, daß die Tubings Reinigungseinrichtungen für die Casings bzw. für die Wassereintrittsbohrungen aufweisen. So können die Tubings mit Reinigungswasseraustrittsdüsen versehen sein und das Reinigungswasser kann über die Tubings zuführbar sein. Die Casings erfüllen ebenfalls eine besondere und zusätzliche Funktion. Sie führen, wie noch dargelegt wird, zunächst die Stangen des Bohrgestänges bei der Herstellung der Bohrungen, sie sind außerdem Drainagerohre.

Gegenstand der Erfindung sind auch Verfahren zur Einbringung einer Einrichtung zum Auffangen des Sickerwassers einer Deponie, wobei die Einrichtung wie vorstehend beschrieben aufgebaut ist. Ein Verfahren ist dadurch gekennzeichnet, daß mit den Hilfsmitteln der Erdölbohrtechnik in das die Deponie umgebende Erdreich bzw. Gestein unter Verwendung von Casings, die aus einzelnen Casing-Rohrschüssen zusammengesetzt sind, verrohrte Bohrungen eingebracht werden, in die nach Ziehen des Bohrgestänges zum Zwecke der Wartung der Casings die Tubings eingeführt werden. Ein anderes Verfahren ist dadurch gekennzeichnet, daß von Übertage aus schräg zur Service-Strecke hinführende Bohrungen niedergebracht werden, die beim Niederbringen der Bohrungen mit Mantelrohren, die Mantelöffnungen aufweisen, verrohrt werden, daß im Anschluß daran ein pumpfähiger Dichtungsbaustoff über die Mantelöffnungen der Mantelrohre in das umgebende Erdreich oder Gebirge eingedrückt wird und daß über die Bohrungen bzw. darin eingebrachte Rohre eintretendes Sickerwasser zur Service-Strecke abgeführt wird. Dabei sind die Casings die Mantelrohre, die die Mantelöffnungen aufweisen. Sie können aber auch durch Drainagerohre ersetzt werden. Bei dieser Ausführungsform liegen in der fertigen Anlage die Mantelrohre mit ihren Mantelöffnungen gleichsam eingebettet in der wie beschrieben hergestellten Abdichtungsschicht, die jedoch Sickerwasser zu den Mantelrohren oder Drainagerohren passieren läßt.

Gegenstand der Erfindung ist aber auch ein Verfahren zum Betrieb einer Einrichtung zum Auffangen des Sickerwassers. Dieses Verfahren ist grundsätzlich dadurch gekennzeichnet, daß zum Zwecke der Aufrechterhaltung der Funktion des Brunnenrostes die Casings von Zeit zu Zeit mit Druckwasser ausgespritzt werden, welches über die Tubings zugeführt wird. Dabei liegt es im Rahmen der Erfindung, daß die Sickerwassereintrittsbohrungen von Zeit zu Zeit oder auch kontinuierlich freigespitzt werden. Das Sickerwasser, aber auch eintretendes Grundwasser, kann zur Service-Strecke hin abgesaugt werden. Im Rahmen des Verfahrens zum Betrieb der beschriebenen Anlage liegt es, daß auf die Casings von Zeit zu Zeit weitere Casing-Rohrschüsse aufgesetzt und in die Bohrung eingedrückt oder eingerüttelt werden, und daß dabei abgehende Casing-Rohrschüsse von der Service-Strecke aus abgenommen werden.

Die durch die Erfindung erreichten Vorteile sind in bezug auf die Anlage zur Sicherung einer Deponie darin zu sehen, daß die aufwendigen bergbautechnischen Maßnahmen, die zu den bekannten Anlagen und Verfahren gehören, jedenfalls dort nicht mehr erforderlich sind, wo das umgebende Gebirge ausreichend wasserdurchlässig ist. Es kann vielmehr auf die wesentlich einfachere Technologie in Erdölfeldern zurückgegriffen werden, die deshalb besonders einfach ist, weil im Deponiebereich die Teufen im Vergleich zum Ölfeld klein sind. Von Bedeutung ist, daß die Rohre, die den Brunnenrost bilden, über lange Zeiträume und ohne große Schwierigkeiten funktionsbereit gehalten werden können, und zwar ohne besonderen Aufwand mit Hilfe der entsprechend eingerichteten Tubings. Im Rahmen der Erfindung müssen zwar mehr oder weniger schräg von Übertage aus Bohrungen zu den Service-Strecken eingebracht werden, das bereitet jedoch mit den technologischen Maßnahmen, die im Erdölfeld üblich sind, keine besonderen Schwierigkeiten, weil beim Einbringen oder Niederbringen einer solchen Bohrung Casings zur Führung des Bohrgestänges dienen und die Tubings unschwer eingebracht werden können. Insoweit ist das erfindungsgemäße Verfahren sowohl in bezug auf das Einbringen der Einrichtung als auch in bezug auf den Betrieb der Anlage durch Einfachheit und Funktionssicherheit ausgezeichnet, und zwar langfristig.

Im folgenden wird die Erfindung anhand einer lediglich ein Ausführungsbeispiel darstellenden Zeichnung ausführlicher erläutert. Es zeigen in schematischer Darstellung
- Fig. 1: einen Querschnitt durch eine Deponie mit erfindungsgemäßer Anlage,
- Fig. 2: den vergrößerten Ausschnitt A aus dem Gegenstand nach Fig. 1,
- Fig. 3: entsprechend der Fig. 1 einen Querschnitt durch eine Deponie mit einer anderen Ausführungsform einer erfindungsgemäßen Anlage, und
- Fig. 4: im Maßstab der Fig. 2 einen Schnitt in Richtung B-B durch den Gegenstand der Fig. 3.

Die in den Figuren dargestellte Anlage dient zur Sicherung einer Deponie 1 gegen vagabundierendes Austreten von Sickerwasser. Zu dieser Anlage gehören im grundsätzlichen Aufbau zumindest eine unterhalb der Deponie 1 oder in entsprechender Tiefe neben der Deponie bergmännisch aufgefahrene und aufgehaltene Service-Strecke 2 mit einer von der Service-Strecke 2 einseitig oder beidseitig schräg nach Übertage geführten Einrichtung 3 zum Auffangen des Sickerwassers, wobei das Sickerwasser über die Service-Strecke 2 abführbar ist.

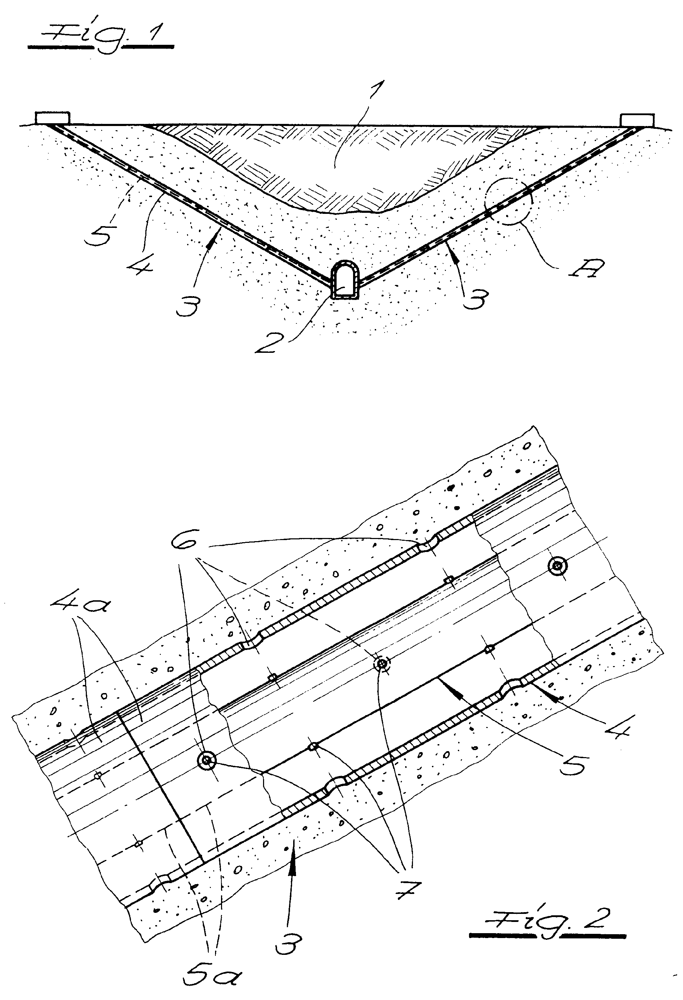

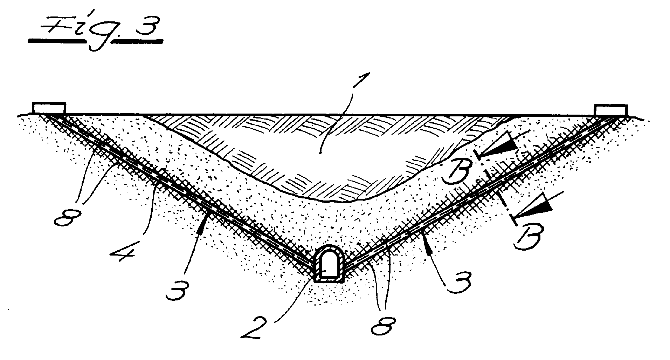

Aus einer vergleichenden Betrachtung der Fig. 1 und 2 entnimmt man, daß die Einrichtung 3 zum Auffangen des Sickerwassers aus den Casings 4 und Tubings 5 von Rohrsystemen derart besteht, wie sie im Ölfeld bei Erdölbohrungen eingesetzt und wie sie bei der Gewinnung von Erdöl üblich sind. Die Casings 4 sind mit Sickerwassereintrittsbohrungen 6 versehen, wozu auf die Fig. 2 verwiesen wird. Die Tubings 5 sind zur Wartung des Innenraumes der Casings 4 und der Sickerwassereintrittsbohrungen 6 einsetzbar, was weiter unten erläutert wird. Die Casings 4 sind mit Abstand voneinander angeordnet und bilden einen Brunnenrost, in den das Sickerwasser, ggf. zusammen mit Grundwasser, eintritt und aus dem es zur Service-Strecke 2 abläuft oder abgesaugt wird. Der Abstand der Casings 4 ist so gewählt, daß das Sickerwasser über das hydrostatische Potential, welches im umgebenden Gebirge an jedem Ort zwischen den Casings 4 und dem Innenraum der Casings 4 besteht und im übrigen auch in der Umgebung dieses Ortes aus hydrodynamischen Gründen nicht in der Lage ist, den Brunnenrost zu passieren. Man erkennt insbesondere in der Fig. 2, daß die Rohre aus einzelnen und gekuppelten Casing-Rohrschüssen 4a und Tubing-Rohrschüssen 5a zusammengesetzt sind. Die Casing-Rohrschüsse 4a sowie die Tubing-Rohrschüsse 5a sind von Übertage aus nachführbar. Nach Maßgabe der Nachführung sind die Casing-Rohrschüsse 4a von der Service-Strecke 2 aus abziehbar.

Die Tubings 5 weisen Reinigungseinrichtungen für die Casings 4 bzw. die Sickerwassereintrittsbohrungen 6 auf. Insoweit sind im Ausführungsbeispiel, wie die Fig. 2 erkennen läßt, die Tubings 5 gleichsam mit Reinigungswasseraustrittsdüsen 7 versehen. Das Reinigungswasser ist dabei über die Tubings 5 zuführbar.

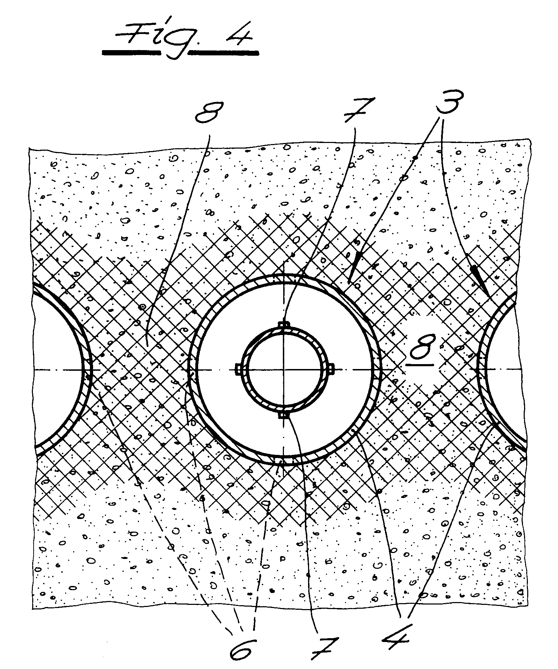

Mit der obigen Beschreibung und den Bezugszeichen 1 bis 7 sind grundsätzlich auch die Fig. 3 und 4 verständlich. Man erkennt, daß zusätzlich über die Sickerwassereintrittsbohrungen 6 ein Abdichtungsmittel in das umgebende Gebirge eingedrückt wurde und dort eine Abdichtungsschicht 8 gebildet hat, die durch Kreuzschraffur angedeutet wurde. Die Abdichtungsschicht 8 ist so angeordnet und ausgelegt, daß das Sickerwasser zu den Tubings 5 und den Sickerwassereintrittsbohrungen 6 gelangen kann.

## Patentansprüche

1. Anlage zur Sicherung einer Deponie (1) gegen vagabundierendes Austreten von Sickerwasser, - mit
zumindest einer unterhalb der Deponie (1) oder in entsprechender Tiefe neben der Deponie aufgefahrenen und aufgehaltenen Service-Strecke (2) und mit einer von der Service-Strecke (2) einseitig oder beidseitig schräg nach Übertage geführten Einrichtung (3) zum Auffangen des Sickerwassers,
wobei das Sickerwassser über die Strecke abführbar ist, **dadurch** **gekennzeichnet**, daß die Einrichtung (3) zum Auffangen des Sickerwassers aus den Casings (4) und Tubings (5) von Rohrsystemen derart besteht, wie sie im Ölfeld bei Erdölbohrungen eingesetzt sind und wie sie bei der Gewinnung von Erdöl eingebracht sind, daß die Casings (4) mit Sickerwassereintrittsbohrungen (6) versehen sind sowie die Tubings (5) zur Wartung des Innenraumes der Casings (4) und der Sickerwassereintrittsbohrungen (6) einsetzbar sind, und daß die Casings (4) mit Abstand voneinander angeordnet sind sowie einen Brunnenrost bilden, in den das Sickerwaser, ggf. zusammen mit Grundwasser, eintritt und aus dem es zur Service-Strecke (2) abläuft oder abgesaugt wird.

2. Anlage nach Anspruch 1, dadurch gekennzeichnet, daß die Rohre aus einzelnen und gekuppelten Casing-Rohrschüssen (4a) und Tubing-Rohrschüssen (5a) zusammengesetzt sind.

3. Anlage nach einem der Ansprüche 1 oder 2, dadurch gekennzeichnet, daß Casing-Rohrschüsse (4a) sowie Tubing-Rohrschüsse (5a) von Übertage aus nachführbar und nach Maßgabe der Nachführung Casing-Rohrschüsse (4a) und Tubing-Rohrschüsse (5a) von der Service-Strecke (2) aus abziehbar sind.

4. Anlage nach einem der Ansprüche 1 bis 3, dadurch gekennzeichnet, daß die Tubings (5) Reinigungseinrichtungen für die Casings (4) bzw. die Sickerwassereintrittsbohrungen (6) aufweisen.

5. Anlage nach Anspruch 4, dadurch gekennzeichnet, daß die Tubings (5) mit Reinigungswasseraustrittsdüsen (7) versehen sind und daß das Reinigungswasser über die Tubings (5) zuführbar ist.

6. Verfahren zum Einbringen einer Einrichtung zum Auffangen des Sickerwassers einer Deponie nach einem der Ansprüche 1 bis 5, dadurch gekennzeichnet, daß mit den Hilfsmitteln der Erdölbohrtechnik in das die Deponie umgebende Erdreich bzw. Gestein mit Hilfe von Casings, die aus einzelnen Casing-Rohrschüssen zusammengesetzt werden, verrohrte Bohrungen eingebracht werden, deren Rohre Sickerwassereintrittsbohrungen aufweisen und in die nach Ziehen des Bohrgestänges zum Zwecke der Wartung der Casings die Tubings eingeführt werden.

7. Verfahren nach Anspruch 6, dadurch gekennzeichnet, daß nach dem Ziehen des Bohrgestänges zunächst ein Abdichtungsmittel über die Sickerwassereintrittsbohrungen in das umgebende Gestein eingebracht wird und daß danach die Tubings eingeführt werden.

8. Verfahren zum Betrieb einer Einrichtung zum Auffangen des Sickerwassers einer Deponie nach einem der Ansprüche 1 bis 5, dadurch gekennzeichnet, daß zum Zwecke der Aufrechterhaltung der Funktion des Brunnenrostes die Casings von Zeit zu Zeit mit Druckwasser ausgespritzt werden, welches über die Tubings zugeführt wird.

9. Verfahren nach Anspruch 8, dadurch gekennzeichnet, daß die Sickerwassereintrittsbohrungen von Zeit zu Zeit mit Druckwasser freigespritzt werden.

10. Verfahren nach Anspruch 8, dadurch gekennzeichnet, daß auf die Casings von Zeit zu Zeit weitere Casing-Rohrschüsse aufgesetzt und in die Bohrung eingedrückt oder eingerüttelt werden und daß dabei abgehende Casing-Rohrschüsse von der Strecke aus abgenommen werden.

## Claims

1. An installation for safeguarding a waste tip (1) against the stray escape of percolation water, - with
at least one service gallery (2) driven and kept open below the waste tip (1) or at a corresponding depth near the waste tip, and with a device (3) for capturing the percolation water led sloping to the surface from one side or both sides of the service gallery (2),
wherein the percolation water can be led off via the gallery, characterised in that the device (3) for capturing the percolation water consists of the casings (4) and tubing sections (5) of pipe systems as used in oilfields in crude oil boreholes and as installed for the extraction of crude oil, that the casings (4) are provided with percolation water inlet holes (6) and the tubing sections (5) can be used for the maintenance of the interior space of the casings (4) and of the percolation water inlet holes (6), and that the casings (4) are disposed at a distance from each other and form a well grid which the percolation water enters, possibly together with groundwater, and from which it runs off or is removed by suction to the service gallery (2).

2. An installation according to claim 1, characterised in that the pipes are assembled from coupled individual lengths of casing pipe (4a) and lengths of tubing pipe (5a).

3. An installation according to one of claims 1 or 2, characterised in that lengths of casing pipe (4a) and lengths of tubing pipe (5a) can be subsequently introduced from the surface, and lengths of casing pipe (4a) and lengths of tubing pipe (5a) can be removed from the service gallery (2) in accordance with the subsequent introduction.

4. An installation according to any one of claims 1 to 3, characterised in that the tubing sections (5) have cleansing devices for the casings (4) or for the percolation water inlet holes (6).

5. An installation according to claim 4, characterised in that the tubing sections (5) are provided with cleansing water outlet nozzles (7) and that the cleansing water can be supplied via the tubing sections (5).

6. A method of placement of a device for capturing the percolation water of a waste tip according to any one of claims 1 to 5, characterised in that cased-in boreholes are introduced into the soil or rock surrounding the waste tip using the resources of crude oil drilling technology and with the aid of casings which are assembled from individual lengths of casing pipe, the pipes of which boreholes have percolation water inlet holes and into which the tubing sections are introduced for casing maintenance purposes after withdrawing the drill column.

7. A method according to claim 6, characterised in that after withdrawing the drill column a sealing medium is first introduced into the surrounding rock via the percolation water inlet holes and that the tubing sections are introduced thereafter.

8. A method of operating a device for capturing the percolation water of a waste tip according to any one of claims 1 to 5, characterised in that the casings are sprayed from time to time with water under pressure, which is introduced via the tubing sections, for the purpose of maintaining the operation of the well network.

9. A method according to claim 8, characterised in that the percolation water inlet holes are sprayed free from time to time with water under pressure.

10. A method according to claim 8, characterised in that additional lengths of casing pipe are placed on the casings from time to time and are pressed into or vibrated into the borehole, and that lengths of casing pipe which are detached during this operation are removed from the gallery.

## Revendications

1. Installation pour la protection d'une décharge (1) contre les fuites migratoires d'eau de suintement, comportant :
au moins une galerie de maintenance (2) ouverte et maintenue ouverte sous la décharge (1), ou placée à côté de celle-ci à une profondeur appropriée et comportant un dispositif (3) pour la réception de l'eau de suintement dirigée obliquement vers l'air libre d'un seul ou des deux côtés de la galerie de maintenance (2),
l'eau de suintement pouvant être évacuée par cette galerie, caractérisée en ce que le dispositif (3) pour la réception de l'eau de suintement est constitué de casings (4) et de tubings (5) de systèmes tubulaires tels que ceux utilisés dans les forages pétroliers et mis en place pour la récupération du pétrole, en ce que les casings (4) sont munis d'orifices (6) pour l'infiltration de l'eau de suintement et en ce que les tubings sont utilisables pour l'entretien de l'espace intérieur des casings (4) et des orifices (6), et en ce que les casings (4) sont disposés à une certaine distance l'un de l'autre et forment une grille de puits dans laquelle pénètre l'eau de suintement, éventuellement en même temps que l'eau de la nappe phréatique, et de laquelle elle s'écoule en étant aspirée en direction de la galerie de maintenance (2).

2. Installation selon la revendication 1, caractérisée en ce que les tubes sont composés de tronçons tubulaires du type casing (4a) et de tronçons tubulaires du type tubing (5a) isolés et accouplés.

3. Installation selon l'une des revendications 1 ou 2, caractérisée en ce que les tronçons tubulaires (4a) du type casing ainsi que les tronçons tubulaires (5a) du type tubing peuvent être introduits successivement à partir de la surface à l'air libre et, compte tenu de leur introduction successive, peuvent être extraits de la galerie de maintenance (2).

4. Installation selon l'une des revendications 1 à 3, caractérisée en ce que les tubings (5) sont munis de dispositifs de nettoyage pour les casings (4) ou pour les orifices (6) d'infiltration de l'eau de suintement.

5. Installation selon la revendication 4, caractérisée en ce que les tubings (5) sont munis de buses (7) d'échappement de l'eau de nettoyage et en ce que l'eau de nettoyage peut être amenée par les tubings (5).

6. Procédé pour la mise en place d'un dispositif pour la réception de l'eau de suintement s'échappant d'une décharge, selon l'une des revendications 1 à 5, caractérisé en ce que, au moyen des outils de la technique de forage du pétrole, sont mis en place des forages tubés, à l'aide de casings composés de tronçons tubulaires du type casing individuels, dans le sol ou dans la roche entourant la décharge, les tubes de ces forages présentant des orifices d'infiltration pour l'eau de suintement et dans lesquels, après l'extraction de la tige de forage, les tubings sont introduits aux fins de l'entretien des casings.

7. Procédé selon la revendication 6, caractérisé en ce que, après l'extraction de la tige de forage, est introduit tout d'abord, dans la roche environnante, un moyen d'étanchéité couvrant les orifices d'infiltration de l'eau de suintement et que, ensuite, sont introduits les tubings.

8. Procédé pour l'exploitation d'une installation de réception de l'eau s'échappant par suintement d'une décharge de déchets selon l'une des revendications 1 à 5, caractérisé en ce que, afin de conserver la fonction de la grille de puits, les casings sont arrosés de temps en temps avec de l'eau pressurisée qui est amenée par les tubings.

9. Procédé selon la revendication 8, caractérisé en ce que les orifices de pénétration de l'eau de suintement sont désobstrués, de temps en temps, au moyen d'arrosages à l'eau pressurisée.

10. Procédé selon la revendication 8, caractérisé en ce que, de temps en temps, d'autres tronçons tubulaires du type casing sont montés sur les casings et introduits sous pression ou par vibrage dans le forage et en ce que les tronçons tubulaires du type casing, devenant alors inutiles, sont enlevés de la galerie de maintenance.
